# EUROPÄISCHE PATENTSCHRIFT

(11) **EP 1 352 261 B1**
(45) Veröffentlichungstag und Bekanntmachung des Hinweises auf die Patenterteilung: **04.05.2005**
(21) Anmeldenummer: 02711766.2
(22) Anmeldetag: 09.01.2002
(51) Int. Cl.: G01S 7/292

(54) **VERFAHREN ZUM VERARBEITEN VON AUSGANGS- ODER BASISSIGNALEN EINER EINRICHTUNG ZUM BESTIMMEN EINES ABSTANDS EINES GEGENSTANDS-**
METHOD FOR PROCESSING OUTPUT OR BASE SIGNALS FROM A DEVICE FOR DETERMINING A DISTANCE OF AN OBJECT
PROCEDE POUR LE TRAITEMENT DE SIGNAUX DE SORTIE OU DE BASE D'UN DISPOSITIF SERVANT A DETERMINER UNE DISTANCE D'UN OBJET

(30) Priorität: 09.01.2001 DE 10100596
(43) Veröffentlichungstag der Anmeldung: 15.10.2003
(73) Patentinhaber: ROBERT BOSCH GMBH, 70442 Stuttgart (DE)
(72) Erfinder: ZIMMERMANN, Uwe, 71636 Ludwigsburg (DE); PRUKSCH, Achim, 74861 Neudenau (DE); UHLER, Werner, 76646 Bruchsal (DE)
(86) Internationale Anmeldenummer: PCT/DE2002/000033
(87) Internationale Veröffentlichungsnummer: WO 2002/056051

(56) Entgegenhaltungen:
- EP-A- 0 215 481
- DE-A- 19 631 590
- US-A- 4 837 579
- US-A- 5 960 097
- LUDLOFF, ALBRECHT: "Praxiswissen Radar und Radarsignalverarbeitung " 1998 , VIEWEG&SOHN VERLAGSGESELLSCHAFT , WIESBADEN XP002197815 Seite 6-1, Zeile 1 -Seite 6-7, Zeile 12 Seite 6-13, Zeile 8 -Seite 6-15, Zeile 8

## Beschreibung

### Technisches Gebiet

Die vorliegende Erfindung betrifft ein Verfahren zum Verarbeiten von Ausgangs- oder Basissignalen, insbesondere von Zwischenfrequenz-Ausgangs- oder Basissignalen, mindestens einer Einrichtung, insbesondere mindestens einer Radareinrichtung, zum Bestimmen eines Abstands, insbesondere eines geringen Abstands in der Größenordnung des Nahbereiches eines Fahrzeuges eines Gegenstands.

### Stand der Technik

Bei sogenannten SRR-Systemen (SRR = short range radar), das heißt bei Radareinrichtungen zum Bestimmen eines insbesondere geringen Abstands sind verschiedene Verfahren der Verarbeitung und Auswertung von Ausgangs- oder Basissignalen bekannt. So basiert ein Verfahren beispielsweise auf einem Schwellwertalgorithmus unter Berücksichtigung eines als konstant angenommenen Untergrundsignals und unter Berücksichtigung von abstandsabhängigen, festen Schwellwerten.

Nun kann es jedoch bei Vorhandensein von mittels SRR-Systemen zu detektierenden oder zu sensierenden Gegenständen, die sich mit hoher Relativgeschwindigkeit bewegen, zu einem Überschreiten der Schwellwerte an Positionen kommen, an denen sich keine Gegenstände befinden.

Derartige unter dem Begriff des parasitären Dopplereffekts subsumierbaren Erscheinungen führen zu unerwünschten Fehlfunktionen und/oder Fehlinformationen. Des weiteren können Fehlfunktionen und/oder Fehlinformationen auch durch intrinsische Phänomene, wie etwa Alterungseffekte oder Temperatureinflüsse, hervorgerufen werden.

### Darstellung der Erfindung: Aufgabe, Lösung, Vorteile

Ausgehend von den vorgenannten Nachteilen und Unzulänglichkeiten liegt der vorliegenden Erfindung die Aufgabe zugrunde, ein Verfahren der eingangs genannten Art zur Verfügung zu stellen, durch das aus den Rohsignalen, das heißt aus den Ausgangs- oder Basissignalen mindestens einer Einrichtung, insbesondere mindestens einer Radareinrichtung, Abstandsinformationen in bezug auf mindestens einen Gegenstand erhaltbar sind, der sich im Detektions- oder Sensierbereich der Einrichtung befindet.

In diesem Zusammenhang wird durch die vorliegende Erfindung angestrebt, die Verarbeitung der Ausgangs- oder Basissignale so auszulegen, daß der Einfluß von Veränderungen in den Ausgangs- oder Basissignalen auf die bezüglich der Maximums- oder Peaklagen auszuwertenden Signalamplituden minimiert wird.

Mithin zielt die vorliegende Erfindung auch auf ein Verfahren ab, mit dem die Detektionssicherheit unter sämtlichen Bedingungen erhöht werden kann.

Diese Aufgabe wird gemäß der Lehre der vorliegenden Erfindung durch ein Verfahren mit den im Anspruch 1 genannten Merkmalen gelöst. Vorteilhafte Ausgestaltungen und zweckmäßige Weiterbildungen des vorliegenden Verfahrens sind in den Unteransprüchen gekennzeichnet.

Mit den Maßnahmen gemäß der vorliegenden Erfindung wird ein robustes, sowohl von extrinsischen Effekten .(beispielsweise parasitärer Dopplereffekt bei Vorhandensein von Gegenständen mit hoher Relativgeschwindigkeit) als auch von intrinsischen Effekten (beispielsweise Alterungsphänomene oder Temperatureinflüsse) weitgehend unabhängiges Verfahren zum Verarbeiten von Ausgangsoder Basissignalen einer Einrichtung zum Bestimmen eines Abstands eines Gegenstands bereitgestellt.

In diesem Zusammenhang wird der Fachmann auf dem Gebiet der Signalverarbeitung insbesondere zu schätzen wissen, daß aufwendige Modifikationen oder Veränderungen der Systemkomponenten im Hochfrequenzteil zum Unterdrücken des parasitären Dopplereffekts oder zum Erhöhen der Detektionssicherheit bei nahezu sämtlichen Anwendungen und Einsatzgebieten, wie etwa bei Einparkhilfen oder bei "Precrash"-Detektionssystemen, entfallen können.

### Kurze Beschreibung der Zeichnungen

Weitere Ausgestaltungen, Merkmale und Vorteile der vorliegenden Erfindung werden nachstehend anhand des durch die Figuren 1 bis 6 veranschaulichten Ausführungsbeispiels näher erläutert.

Es zeigt:
- Fig. 1: ein Diagramm, in dem der typische Verlauf eines Zwischenfrequenz-Ausgangs- oder Basissignals am Mischerausgang einer Mikrowellen-Detektoreinrichtung über dem Abstand vom Gegenstand aufgetragen ist;
- Fig. 2: ein Diagramm, in dem der typische Verlauf eines Zwischenfrequenz-Ausgangs- oder Basissignals am Mischerausgang einer Radareinrichtung bei strukturiertem Untergrundsignal über dem Abstand vom Gegenstand aufgetragen ist;
- Fig. 3: ein Diagramm, in dem der Verlauf des Zwischenfrequenz-Ausgangs- oder Basissignals gemäß Fig. 1 oder 2 nach Digital-Analog-Wandlung aufgetragen ist;
- Fig. 4: ein Diagramm, in dem der Verlauf des Betragssignals der Differenz aus Ausgangs- oder Basissignal und Untergrundsignal über dem Abstand vom Gegenstand aufgetragen ist;
- Fig. 5: ein Diagramm, in dem der Verlauf des durch Korrelieren, insbesondere Multiplizieren, des tiefpaßgefilterten Betragssignals gemäß Fig. 4 mit einem eine Halbwertsbreite aufweisenden Referenzmaximum gebildeten Korrelationssignals über dem Abstand vom Gegenstand aufgetragen ist; und
- Fig. 6: ein Diagramm, in dem der Verlauf des mittels eines aus dem Korrelationssignal gemäß Fig. 5 bestimmbaren ortsvariablen adaptiven Schwellwertes ermittelten Signals mit Maximum über dem Abstand vom Gegenstand aufgetragen ist.

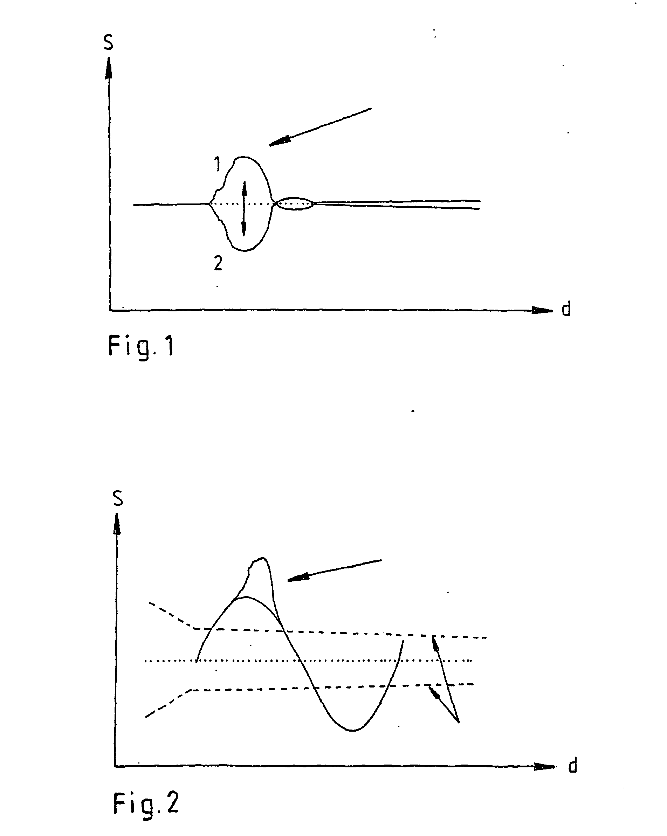

Gleiche oder ähnliche Ausgestaltungen, Elemente oder Merkmale sind in den Figuren 1 bis 6 mit identischen Bezugszeichen versehen.

### Bester Weg zur Ausführung der Erfindung

Anhand der Figuren 1 bis 6 wird ein Ausführungsbeispiel für ein Verfahren zum Verarbeiten von Zwischenfrequenz-Ausgangs- oder Basissignalen S, die auch als Zwischenfrequenz-Rohsignale bezeichnet werden können, mittels einer Mikrowellen-Detektoreinrichtung (vgl. Figur 1) bzw. mittels einer Radareinrichtung bei strukturiertem Untergrundsignal S₀ (vgl. Figur 2) veranschaulicht.

Mit diesem Verfahren kann der Abstand d eines Gegenstands, beispielsweise - beim Einparken eines Kraftfahrzeugs - der Abstand des Randsteins oder der Stoßstange des vorderen bzw. nachfolgenden abgestellten Kraftfahrzeugs, bestimmt werden. In diesem Zusammenhang sind mit dem Verfahren gemäß der vorliegenden Erfindung insbesondere geringe Abstände in der Größenordnung des Nahbereiches eines Fahrzeuges, beispielswese von etwa null Meter bis etwa dreißig Meter ermittelbar.

Die Figuren 1 und 2 zeigen hierbei typische Eigenschaften von Zwischenfrequenz-Ausgangs- oder Basissignalen S (= Rohsignalen).

Diese Rohsignale liegen in einem im Niedervoltbereich, insbesondere in einem Ausgangsspannungsbereich von etwa null Volt bis etwa fünf Volt, wobei der Mittelwert bei etwa 2,5 Volt liegen sollte. Die Untergrundsignale S₀, das heißt die Signale in Abwesenheit von Gegenständen weisen in Abhängigkeit von der Art der Sensoreinrichtung (Sampling-Phase-Detektoreinrichtung in Figur 1; Radareinrichtung in Figur 2) einen unterschiedlichen Mittelwert sowie eine mehr oder minder stark ausgeprägte Strukturierung auf.

Das SRR-System (SRR = short range radar) arbeitet in diesem Zusammenhang als Sampling-Phase-Detektoreinrichtung (--> phasenabhängige Pulsradareinrichtung), das heißt es ergeben sich bei der Zwischenfrequenz in Abhängigkeit vom Abstand zum zu detektierenden Gegenstand Auslöschungen der Abstandsmaxima (vgl. Figur 1); positive und negative Maxima folgen hierbei jeweils in Abständen einer viertel Wellenlänge (λ/4), das heißt in Abständen von etwa drei Millimeter bei einer Trägerfrequenz von insbesondere etwa 24 Gigahertz, auf Auslöschungen.

Dem Zwischenfrequenz-Ausgangs- oder Basissignal S (= Rohsignal) können durch extrinsische Erscheinungen, wie etwa den parasitären Dopplereffekt (vgl. Figur 2), und/oder durch intrinsische Phänomene, wie etwa Alterungseffekte oder Temperatureinflüsse, bedingte Anteile überlagert sein, die dazu führen, daß das Untergrundsignal S₀ sehr stark strukturiert sein kann.

Beim Verfahren gemäß dem Ausführungsbeispiel werden die digitalisierten Spannungswerte des Zwischenfrequenz-Ausgangs- oder Basissignals S der Sampling-Phase-Detektoreinrichtung (vgl. Figur 1: das durch den Pfeil markierte Gegenstandsmaximum M zeigt aufgrund der Sampling-Phase-Detektoreinrichtung bei "1" ein "Durchschwingverhalten"; bei "2" ist der Gegenstand um eine halbe Wellenlänge (λ/2) gegenüber "1" verschoben; vgl. Figur 2: das durch den einzelnen Pfeil markierte Gegenstandsmaximum M liegt auf durch den parasitären Dopplereffekt bedingtem strukturiertem Untergrund; durch den doppelten Pfeil sind feste, abstandsabhängige Schwellwerte markiert) zunächst einer Digital-Analog-Wandlung unterzogen, bevor das Untergrundsignal S₀ durch ortslokales Filtern des Ausgangs- oder Basissignals S mittels eines ortslokalen Medianfilters einer bestimmten Breite B adaptiv ermittelt wird.

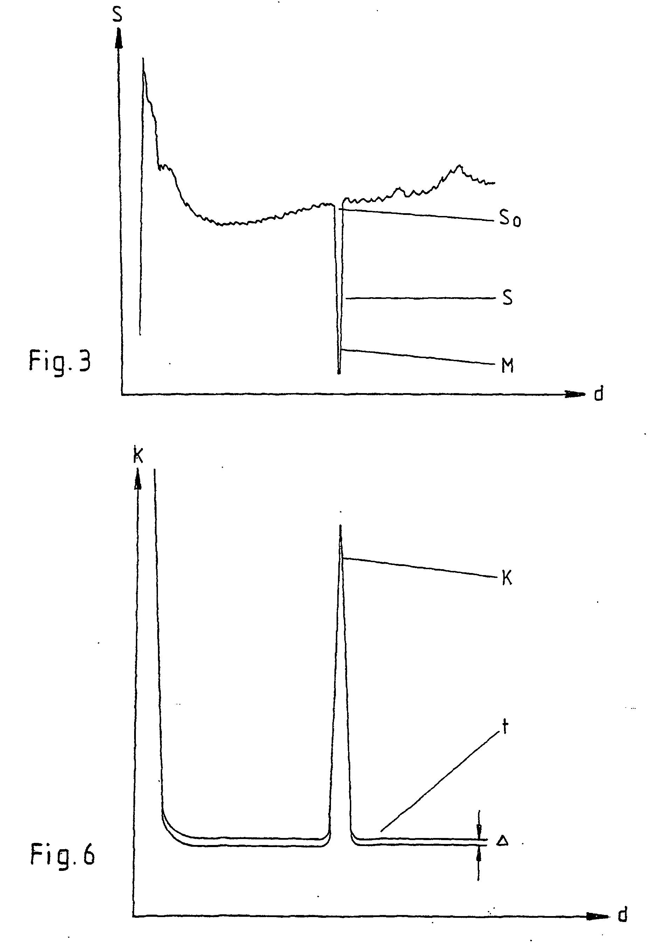

Hierzu werden zu einem bestimmten Zeitpunkt mehrere, beispielsweise elf Spannungswerte des Ausgangs- oder Basissignals S über das Spektrum gemessen, sortiert und der Median (als Wert in der Mitte des Fensters) ausgewählt, wobei die Breite B des ortslokalen Medianfilters an die Maximumsbreite im Ausgangs- oder Basissignal S für den Gegenstand angepaßt wird (vgl. Figur 3). Durch diese Median- oder Mittelwertbildung wird das Gegenstandsmaximum M herausgearbeitet (vgl. Figur 3), "störende" Maxima eliminiert.

Im Anschluß daran erfolgt ein Korrigieren des Untergrunds des Ausgangsoder Basissignals S. Hierzu wird das mittels des ortslokalen Filterns ermittelte Untergrundsignal S₀ vom Ausgangs- oder Basissignal S subtrahiert und das Betragssignal s = abs(S-S₀) der Differenz S-S₀ aus Ausgangs- oder Basissignal S und Untergrundsignal S₀ gebildet. Diese Betragsbildung trägt dem Umstand Rechnung, daß die Signalamplitude aufgrund der Eigenschaften der Sampling-Phase-Detektoreinrichtung um den Mittelwert schwanken kann, und zeitigt demzufolge den Vorteil, daß das Korrigieren auch bei variablen Untergrundsignalen S₀ in zuverlässiger Manier erfolgt (bei "festem" konstantem Untergrund könnte auch in pauschaler Weise eine Differenz gebildet werden).

Um nun mit dem vorliegenden Verfahren die Detektionssicherheit unter sämtlichen Bedingungen zu erhöhen, ist nach der Korrektur des Untergrunds ein zeitliches Tiefpaßfiltern des aufbereiteten Betragssignals s vorgesehen. Hierzu werden die positiven Anteile und die negativen Anteile im aufbereiteten Betragssignal s über mehrere Meßzyklen aufsummiert, wobei das zeitliche Tiefpaßfiltern mittels eines gleitenden Mittelwertfilters mit bestimmter Zeitkonstante erfolgt.

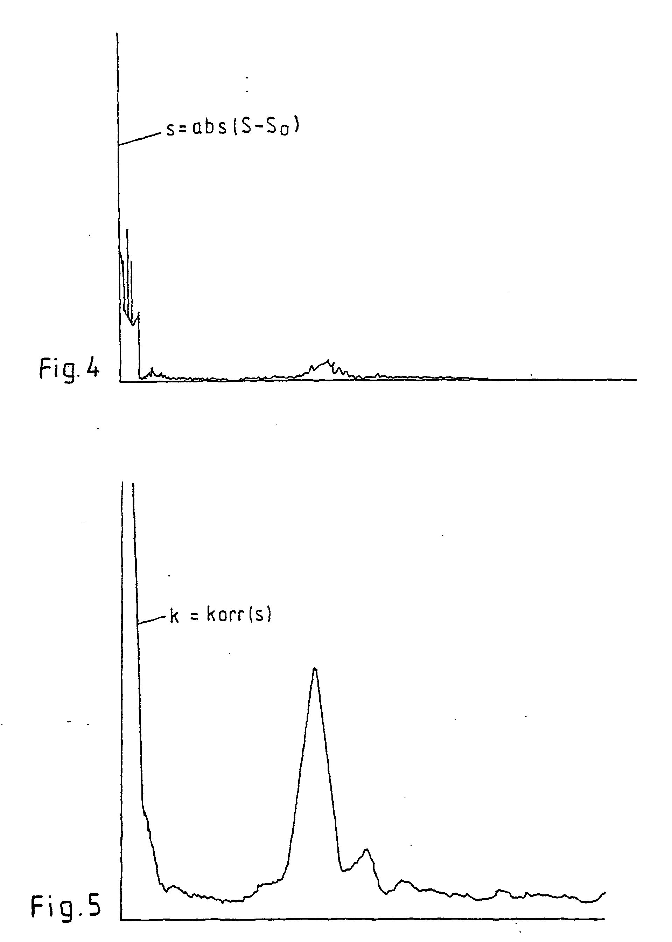

Im Anschluß daran wird zur Peakverstärkung, das heißt zum Verstärken des Maximums gemäß den Figuren 4 und 5 ein Korrelationssignal k = korr(s) durch Korrelieren, das heißt im Falle des vorliegenden Ausführungsbeispiels durch Falten des tiefpaßgefilterten Betragssignals s mit einem eine Halbwertsbreite aufweisenden Referenzmaximum ermittelt.

Bei der sich daran anschließenden Peakdetektion, das heißt bei der Ermittlung der Peaklagen wird das Gegenstandsmaximum M mittels eines aus dem Korrelationssignal k (vgl. Figur 6) bestimmbaren ortsvariablen adaptiven Schwellwertes t (vgl. Figur 6) bestimmt, wobei der ortsvariable adaptive Schwellwert t mit einem abstandsabhängigen Offsetwert Δ (vgl. Figur 6) beaufschlagt wird.

Um nun den konkreten Abstand des Gegenstands zu erhalten, wird die Peaklage, das heißt die Position des Gegenstandsmaximums M mittels einer durch Kalibrieren bestimmten Kennlinie zu einem bestimmten Abstand d des Gegenstands zugeordnet. Hierbei ist zu berücksichtigen, daß der Zusammenhang zwischen dem Signalpeak und dem Abstand des Gegenstands bzw. nachstehend noch kurz zu erläuternden Auflösungszellen nicht linear ist, wodurch die Ermittlung der Kalibrationskennlinie erforderlich wird.

Dies vollzieht sich mittels sogenannter Auflösungszellen, das heißt der Bereich des Bestimmens des Abstands d des Gegenstands wird in eine bestimmte Anzahl von Zellen, beispielsweise in 2⁸ = 256 Zellen (acht Bit), unterteilt, wodurch sich beim Ausführungsbesipiel des vorliegenden Verfahrens Referenzmessungen in 256 Stufen anbieten; demzufolge wird praktisch festgestellt, in welcher der 256 Auflösungszellen sich der Gegenstand befindet.

## Patentansprüche

1. Verfahren zum Verarbeiten von Ausgangs- oder Basissignalen (S), insbesondere von Zwischenfrequenz-Ausgangs- oder Basissignalen, mindestens einer Einrichtung, insbesondere mindestens einer Radareinrichtung, zum Bestimmen eines Abstands (d), insbesondere eines geringen Abstands in der Größenordnung des Nahbereiches eines Fahrzeuges, eines Gegenstands, aufweisend die folgenden Schritte:
(a) adaptives Ermitteln des Untergrundsignals (S₀) durch ortslokales Filtern des Ausgangs- oder Basissignals (S) mittels mindestens eines ortslokalen Filters einer bestimmten Breite (B);
(b) Korrigieren des Untergrunds des Ausgangs- oder Basissignals (S)
(b.1) durch Subtrahieren des ermittelten Untergrundsignals (S₀) vom Ausgangs- oder Basissignal (S) und
(b.2) durch Bilden eines Signals, insbesondere z.B. des Betragssignals (s = abs(S-S₀)) der Differenz (S-S₀) aus Ausgangs- oder Basissignal (S) und Untergrundsignal (S₀);
(c) Tiefpaßfiltern, insbesondere zeitliches Tiefpaßfiltern, des Betragssignals (s);
(d) Bilden eines Korrelationssignals (k = korr(s)) durch Korrelieren, insbesondere Falten, des Signals, insbesondere tiefpaßgefilterten Betragssignals (s) mit mindestens einem eine Halbwertsbreite aufweisenden Referenzmaximum; und
(e) Ermitteln des mindestens einen Gegenstandsmaximums (M) mittels mindestens eines aus dem Korrelationssignal (k) bestimmbaren ortsvariablen adaptiven Schwellwertes (t).

2. Verfahren gemäß Anspruch 1, **dadurch gekennzeichnet, daß** das Ausgangs- oder Basissignal (S) vor dem adaptiven Ermitteln des Untergrundsignals (S₀) digital-analog-gewandelt wird.

3. Verfahren gemäß Anspruch 1 oder 2, **dadurch gekennzeichnet, daß** das ortslokale Filtern des Ausgangs- oder Basissignals (S) zu einem bestimmten Zeitpunkt durch Messen, Sortieren und Auswählen des Mittelwertes aus mehreren, beispielsweise elf, Spannungswerten über das Spektrum erfolgt.

4. Verfahren gemäß mindestens einem der Ansprüche 1 bis 3, **dadurch gekennzeichnet, daß** das Ausgangs- oder Basissignal (S) mittels mindestens eines Medianfilters ortslokal gefiltert wird.

5. Verfahren gemäß mindestens einem der Ansprüche 1 bis 4, **dadurch gekennzeichnet, daß** die Breite (B) des ortslokalen Filters an die Breite des Gegenstandsmaximums (M) des Ausgangs- oder Basissignals (S) für den Gegenstand angepaßt wird.

6. Verfahren gemäß mindestens einem der Ansprüche 1 bis 5, **dadurch gekennzeichnet, daß** das Betragssignal (s) durch Aufsummieren der Anteile im Betragssignal (s) über mindestens einen, insbesondere über mehrere Bestimmungszyklen tiefpaßgefiltert wird.

7. Verfahren gemäß mindestens einem der Ansprüche 1 bis 6, **dadurch gekennzeichnet, daß** das Tiefpaßfiltern mittels mindestens eines insbesondere gleitenden Mittelwertfilters mit bestimmter Zeitkonstante erfolgt.

8. Verfahren gemäß mindestens einem der Ansprüche 1 bis 7, **dadurch gekennzeichnet, daß** der ortsvariable adaptive Schwellwert (t) mit mindestens einem abstandsabhängigen Offsetwert (Δ) beaufschlagt wird.

9. Verfahren gemäß mindestens einem der Ansprüche 1 bis 8, **dadurch gekennzeichnet, daß** das Gegenstandsmaximum (M) zu einem bestimmten Abstand (d) des Gegenstands mittels mindestens einer durch Kalibrieren bestimmten Kennlinie zugeordnet wird.

10. Verfahren gemäß mindestens einem der Ansprüche 1 bis 9, **dadurch gekennzeichnet, daß** der Bereich des Bestimmens des Abstands (d) des Gegenstands in eine bestimmte Anzahl von Zellen, beispielsweise in 2⁸ = 256 Zellen (acht Bit), unterteilt wird.

## Claims

1. Method for processing output or base signals (S), in particular intermediate-frequency output or base signals, of at least one device, in particular at least one a radar device, for determination of a distance (d), in particular a short distance in the order of magnitude of the proximity area of a vehicle, to an object, having the following steps:
(a) adaptive determination of the background signal (S₀) by local-position filtering of the output or base signal (S) by means of at least one local-position filter of a specific width (B);
(b) correction of the background of the output or base signal (S),
(b.1) by substraction of the determined background signal (S₀) from the output or base signal (S), and
(b.2) by formation of a signal, in particular for example the magnitude signal (s = abs(S-S₀)) of the difference (S-S₀) between the output or base signal (S) and the background signal (S₀);
(c) low-pass filtering, in particular time low-pass filtering, of the magnitude signal (s);
(d) formation of a correlation signal (k = korr(s)) by correlation, in particular convolution, of the signal, in particular of the low-pass-filtered magnitude signal (s) with at least one reference maximum which has a three dB width; and
(e) determination of the at least one object maximum (M) by means of at least one position-variable adaptor threshold value (t) which can be determined from the correlation signal (k).

2. Method according to Claim 1, **characterized in that** the output or base signal (S) is converted from digital to analogue form before adaptive determination of the background signal (S₀).

3. Method according to Claim 1 or 2, **characterized in that** the local-position filtering of the output or base signal (S) is carried out at a specific time by measurement, sorting and selection of the mean value from two or more, for example eleven, voltage values over the spectrum.

4. Method according to at least one of Claims 1 to 3, **characterized in that** the output or base signal (S) is filtered on a local-position basis by means of at least one median filter.

5. Method according to at least one of Claims 1 to 4, **characterized in that** the width (B) of the local-position filter is matched to the width of the object maximum (M) of the output or base signal (S) for that object.

6. Method according to at least one of Claims 1 to 5, **characterized in that** the magnitude signal (s) is low-pass filtered by adding up the components in the magnitude signal (s) over at least one, and in particular over two or more, determination cycles.

7. Method according to at least one of Claims 1 to 6, **characterized in that** the low-pass filtering is carried out by means of at least one, in particular sliding, mean-value filter with a specific time constant.

8. Method according to at least one of Claims 1 to 7, **characterized in that** the variable-precision adaptive threshold value (t) has at least one distance-dependent offset value (Δ) applied to it.

9. Method according to at least one of Claims 1 to 8, **characterized in that** the object maximum (M) is associated with a specific distance (d) of the object by means of at least one characteristic, which is determined by calibration.

10. Method according to at least one of Claims 1 to 9, **characterized in that** the area of the determination of the distance (d) to the object is subdivided into a specific number of cells, for example in 2⁸ = 256 cells (eight bits).

## Revendications

1. Procédé pour traiter des signaux de sortie ou de base (S), en particulier des signaux de sortie ou de base à fréquence intermédiaire, sur au moins une installation, en particulier sur au moins une installation radar, pour déterminer un distance (d) d'un objet, en particulier une faible distance de l'ordre de grandeur de la zone rapprochée d'un véhicule, selon les étapes suivantes :
(a) déterminer de façon adaptative le signal de fond (So) en filtrant localement le signal de sortie ou de base (S) à l'aide d'au moins un filtre local d'une largeur (B) déterminée,
(b) corriger le fond du signal de sortie ou de base (S),
(b.1) en soustrayant le signal de fond (So) établi du signal de sortie ou de base (S) et
(b.2) en formant un signal, en particulier par exemple le signal de montant (s = abs (S - So)) de la différence (S - So) entre le signal de sortie ou de base (S) et le signal de fond (So),
(c) réaliser sur le signal de montant (s) un filtrage passe-bas, en particulier un filtrage passe-bas dans le temps,
(d) former un signal de corrélation (k = korr (s)) en corrélant, en particulier en convoluant, le signal, en particulier le signal de montant (s) obtenu par filtrage passe-bas, avec au moins un maximum de référence qui a une largeur de valeur moyenne et
(e) déterminer l'au moins un maximum d'objet (M) à l'aide d'au moins une valeur seuil (t) adaptative qui varie en fonction du lieu et qui peut être déterminée à partir du signal de corrélation (k).

2. Procédé selon la revendication 1,
**caractérisé en ce que**
le signal de sortie ou de base (S) est soumis à une conversion numérique/analogique avant la détermination adaptative du signal de fond (S₀).

3. Procédé selon l'une des revendications 1 ou 2,
**caractérisé en ce qu'**
on filtre localement le signal de sortie ou de base (S) à un instant donné en mesurant, en triant et en sélectionnant la valeur moyenne parmi plusieurs valeurs voltmétriques dans le spectre, par exemple onze.

4. Procédé selon au moins une des revendications 1 à 3,
**caractérisé en ce que**
le signal de sortie ou de base (S) est filtré localement à l'aide d'au moins un filtre médian.

5. Procédé selon au moins une des revendications 1 à 4,
**caractérisé en ce que**
la largeur (B) du filtre local est ajustée à la largeur du maximum d'objet (M) du signal de sortie ou de base (S) pour l'objet.

6. Procédé selon au moins une des revendications 1 à 5,
**caractérisé en ce que**
le signal de montant (s) est soumis à un filtrage passe-bas en additionnant les parties dans le signal de montant (s) sur au moins un cycle de détermination, en particulier sur plusieurs.

7. Procédé selon au moins une des revendications 1 à 6,
**caractérisé en ce que**
le filtrage passe-bas est réalisé à l'aide d'au moins un filtre de moyenne, en particulier mobile, dont la constante de temps est déterminée.

8. Procédé selon au moins une des revendications 1 à 7,
**caractérisé en ce que**
la valeur seuil (t) adaptative en fonction du lieu est alimentée par au moins une valeur de décalage (Δ) qui dépend de la distance.

9. Procédé selon au moins une des revendications 1 à 8,
**caractérisé en ce que**
le maximum d'objet (M) est associé à une distance (d) donnée de l'objet à l'aide d'au moins une courbe caractéristique déterminée par étalonnage.

10. Procédé selon au moins une des revendications 1 à 9,
**caractérisé en ce que**
la zone dans laquelle on détermine la distance (d) de l'objet est subdivisée en un certain nombre de cellules, par exemple en 2⁸ = 256 cellules (huit bits).
